# EUROPÄISCHE PATENTSCHRIFT

(11) **EP 3 031 334 B1**
(45) Veröffentlichungstag und Bekanntmachung des Hinweises auf die Patenterteilung: **19.06.2019**
(21) Anmeldenummer: 14197284.4
(22) Anmeldetag: 11.12.2014
(51) Int. Cl.: A23G 1/26, A23G 3/34, A23G 3/02

(54) **Transportwagen für ein Formen-Transportsystem**
Carriage assembly for a mould transport system
Chariot de transport pour un système de transport de moules

(43) Veröffentlichungstag der Anmeldung: 15.06.2016
(73) Patentinhaber: Bühler GmbH, 51702 Bergneustadt (DE)
(72) Erfinder: Bühler, Leo, 8820 Wädenswil (CH)
(74) Vertreter: Hepp Wenger Ryffel AG

(56) Entgegenhaltungen:
- EP-A1- 0 285 527
- EP-A2- 0 242 177
- WO-A1-2009/001250
- US-B1- 6 438 780

## Beschreibung

Die Erfindung betrifft einen Transportwagen für ein Formen-Transportsystem, ein Modul für ein Transportsystem, insbesondere für Formen bei der Herstellung von Süsswaren, ein Transportsystem, eine Fertigungsstrasse für Süsswaren, die Verwendung von Transportwagen zum Transport von Formen in einer Fertigungsstrasse für Süsswaren und ein Verfahren zum Transportieren von Formen in einer Fertigungsstrasse für Süsswaren.

Für die Herstellung von Süsswaren, im Speziellen von Schokoladenprodukten, werden Formen, bevorzugt aus Kunststoff, Metall oder auch Holz, in unterschiedlichen Grössen und mit darin ausgeformten produktspezifischen Kavitäten verwendet. Die Formen werden typischerweise mittels einer Kette oder eines Endlosbandes zwischen den Bearbeitungsstationen bewegt, wie dies zum Beispiel in US 5180602 oder DE 3740109 gezeigt ist.

Die Kette schiebt oder zieht die Formen, beispielsweise mittels eines Mitnehmers, oder kann gegebenenfalls auch zumindest zeitweilig fest mit den Formen verbunden sein. Die Führung wird beispielsweise über beidseitig angeordnete Führungsprofile bewerkstelligt.

Auf einem Förderband könnten die Formen auch lose aufliegen und über den Reibschluss mitgenommen werden. Dabei werden die Formen im Takt oder in einem kontinuierlichen Betrieb typischerweise in eine Richtung zwischen einzelnen Bearbeitungsstationen bewegt.

Sowohl bei den Kettenanlagen als auch den Losformanlagen muss ein Taktbetrieb nicht über die ganze Anlage mit gleicher Geschwindigkeit ablaufen. Für diesen Anlagentyp werden dann mehrere Kettenpaare oder mehrere, gegebenenfalls unterschiedliche, Förderer verwendet. Dabei muss die Form von Zeit zu Zeit von der einen Kette an die nachfolgende Kette oder an ein nachfolgendes Band übergeben werden.

Für bestimmte notwendige Bewegungen der Form, z.B. ein Anheben, Absenken, ein Rütteln oder Wenden muss die Form an eine entsprechende Bewegungseinrichtung, zum Beispiel einen geeigneten Formentisch, übergeben werden, der die Form in die geplante Bewegung versetzt.

Für Losformanlagen gibt es keine Standardtransportsysteme, weshalb diese für jede Anlage individuell geplant und ausgeführt werden müssen.

Toleranzen oder auch Veränderungen der Transportsysteme im laufenden Betrieb, beispielsweise eine sich im Laufe der Zeit etwas längende Kette oder andere Fördereinrichtung, haben zur Folge, dass die Formen im Stillstand nicht exakt an der gewünschten Position liegen oder nicht exakt an die Bearbeitungsstationen übergeben werden. Das bringt die Gefahr von Anlagenstörungen oder zumindest unschönen Produkten mit sich.

Insgesamt entsteht ein erheblicher Planungsaufwand, um die entsprechende Positionen der Formen in der Anlage festzulegen und/oder über eine Anlagensteuerung oder Anlagenkontrolle festzustellen, wo genau sich welche Form befindet.

Bei Bandanlagen ist inhärent der Nachteil gegeben, dass die Steuerung nicht ohne weiteres ermitteln kann, wo sich welche Form befindet, da das Band stetig weiterläuft. Die Formen werden durch Stopperzylinder an den Bearbeitungsstationen angehalten. Falls dabei die Formen aneinander laufen, werden sie mittels anderer Zylinder wieder vereinzelt. Falls eine zusätzliche Form in den Umlauf gesetzt wird, ist eine Anlagenstörung so gut wie sicher.

In der DE 101 24 224 A1 ist eine Transportvorrichtung für Formenkästen in einer Modulanlage beschrieben, mit welcher Formenkästen auf Führungsschienen durch eine angetriebene, ortsfeste Mitnehmeranordnung verschoben werden können.

In der WO 86/06668 A1 ist eine Spezialmaschine zur Herstellung von Werkstücken, die mehrere Arbeitsgänge beansprucht, mit diskontinuierlicher Bewegung des Produkts, sowie ein dazugehörendes Getriebe offenbart. Auf einem Maschinengestell bewegen sich diskontinuierlich das Produkt transportierende Elemente auf einer gebundenen Bahn zwischen den Bearbeitungseinheiten. Die das Produkt transportierende Elemente können dabei ihre Bewegungen selbständig und in einer gegenüber einander im Allgemeinen verschobenen Phase ausführen. Die das Produkt transportierende Elemente sind dazu mit einem zur zyklischen Verbindung geeigneten Verbindungselement zu einem Schleppsystem versehen. Weiter weist die Maschine ein Getriebe mit diskontinuierlicher Drehbewegung auf mit einer kontinuierlich sich drehenden Antriebswelle.

In der WO 2009/001250 A1 ist eine Transporteinrichtung für eine Mehrzahl von Formen beschrieben, wobei jede Form eine elektronische Identifikationseinrichtung mit einer Speichereinrichtung aufweist. Jede Bearbeitungsstation ist mit einem Prozessor und mit Einrichtungen zum Lesen und Beschreiben der Speichereinrichtung der Formen sowie zur Änderung des Bearbeitungsvorganges in Abhängigkeit der Informationen in der Speichereinrichtung ausgestattet.

Die EP 0 285 527 A1 zeigt einen automatischen Transportwagen mit eigenem Antrieb für Fertigungsprozesse.

EP 0 242 177 A2 und US 6 438 780 B1 zeigen weitere Fördersysteme mit angetriebenen Transporteinheiten.

Aufgabe der vorliegenden Erfindung ist es somit, einen Transportwagen für ein funktionssicheres Transportsystem mit hoher Flexibilität in der baulicher Auslegung, im Bearbeitungsprozess sowie in Anzahl und Abfolge der Formen bereit zu stellen, ebenso wie ein entsprechendes Transportsystem, eine entsprechende Fertigungsstrasse, eine entsprechende Verwendung und ein entsprechendes Verfahren.

Die Aufgabe wird durch die Merkmale der unabhängigen Ansprüche gelöst. Vorteilhafte Weiterbildungen sind in der nachfolgenden Beschreibung, den Figuren und in den abhängigen Patentansprüchen dargelegt.

Die Aufgabe wird zunächst gelöst durch einen Transportwagen zum Transport von Formen in einem Transportsystem in einer Fertigungsstrasse für Süsswaren.

Unter einem Transportwagen wird in der vorliegenden Anmeldung ein Vehikel zum Transport von Formen in einem Transportsystem in einer Fertigungsstrasse für Süsswaren verstanden. Der Transportwagen kann Bänder, Ketten, Rollen, Räder oder Ritzel aufweisen und/oder mit Bändern, Ketten, Rollen, Räder oder Ritzeln zusammenwirken.

Das Transportsystem ist bevorzug räumlich fest installiert oder installierbar und gibt somit den Weg vor, den die Transportwagen nehmen, zum Beispiel zwischen zwei Bearbeitungsstationen.

Der Transportwagen verfügt über eine Aufnahme für mindestens eine Form oder enthält mindestens eine Form.

Erfindungsgemäss ist der Transportwagen mit einem eigenen Antrieb ausgestattet. Der Transportwagen umfasst insbesondere einen Motor oder mehrere Motoren.

In einem Transportsystem können mehrere Transportwagen vorgesehen sein, von denen jeder einzelne Transportwagen mit einem eigenständigen Antriebssystem ausgestattet sein kann, während bei den bekannten Transportsystemen die Formenträger passive Elemente sind, die von Ketten oder Bändern gezogen und/oder geschoben wurden und keine unabhängigen Bewegungen ausführen konnten.

Durch den eigenen Antrieb kann der Transportwagen die Form unabhängig von den Formen anderer Transportwagen bewegen und/oder Funktionen übernehmen, die bislang von anderen Einrichtungen eines Transportsystems übernommen werden mussten. Dadurch kann ein Transportsystem kompakter ausgeführt werden und die Verarbeitungsabläufe können gestrafft werden, was zu einer Verkürzung der Produktionszeiten und/oder zu einer Vereinfachung der Herstellung führen kann.

Die zu transportierenden Formen für die Süsswarenherstellung, können zuverlässig und gleichzeitig flexibel transportiert werden. Jede einzelne Form wird autonom und weitestgehend unabhängig von den anderen Formen gehalten. Dies erlaubt neue, flexiblere Produktionsabläufe, die bislang nicht möglich waren.

In einer bevorzugten Ausführungsform ist der Antrieb des Transportwagen mit zumindest einer Antriebseinrichtung ausgestattet, die aus der Gruppe von Fortbewegungseinrichtungen, Rütteleinrichtungen, Wendeeinrichtungen, Hebe-und/oder Senkeinrichtungen oder Verdreheinrichtungen gewählt ist.

Mit dem Transportwagen werden die Vorteile mehrerer bisheriger Transporteinrichtungen gemeinsam erreicht.

Die Antriebseinrichtung wirkt vorzugsweise über zumindest ein mechanisches Kontaktelement auf die Form ein, sodass die Form sich mit dem Transportwagen oder gegenüber einem Rahmen des Transportwagens bewegt. Bevorzugt weist der Transportwagen einen Rahmen und eine Formenauflage auf, wobei das Kontaktelement zwischen Rahmen und Formenauflage oder zwischen Formenauflage und Form angeordnet sein kann.

Die Antriebseinrichtung kann auch mit einem entsprechenden Gegenstück eines Transportsystems zusammenwirken, sodass der Transportwagen eine Bewegung gegenüber einer bevorzugt räumlich fest installierten Bahn oder gegenüber einem bevorzugt räumlich fest installierten Bahnelement durchführt.

Dabei bewirkt eine Fortbewegungseinrichtung eine Bewegung des Transportwagens entlang einer Bahn oder entlang eines Bahnelements, eine Abgabe der Form aus dem Transportwagen, zum Beispiel auf einen anderen Transportwagen und/oder an eine Bearbeitungs- oder Speicherstation und/oder eine Aufnahme einer Form auf den Transportwagen.

Die Rütteleinrichtung sorgt für eine, insbesondere horizontale Bewegung auf einer geschlossen Linie, zum Beispiel eine "hin- und her"- Bewegung, wobei sich in der Form befindliche Lebensmittelmasse gleichmässig in den Kavitäten der Form verteilen kann.

Die Wendeeinrichtung sorgt für ein Wenden der Form, wobei der Rahmen des Transportwagens, die Formenauflage oder nur die Form gewendet werden kann. Das Wenden dient insbesondere dazu, überschüssige Lebensmittelmasse aus den Kavitäten der Form auslaufen zu lassen und/oder die Innenflächen der Kavitäten mit Lebensmittelmasse zu benetzen.

Die Hebe-und/oder Senkeinrichtungen sorgen für eine vertikale Bewegung der Formen, zum Beispiel, um die Kavitäten der Form an eine Giessmaschine heranzuführen oder die Kavitäten beim Vergiessen von Lebensmittelmasse von den Düsen zu entfernen.

Die Verdreheinrichtung sorgt für eine Ausrichtungsänderung der Formen. Dies kann nötig sein, bei einer Änderung der Fortbewegungsrichtung in einem Transportsystem, zum Beispiel einem Abbiegen, beim Überführen der Form in eine inaktive Position, beispielweise vor einem Abgeben der Form vom Transportwagen oder bei der Abgabe der Form aus dem Transportsystem.

Bestimmte Bearbeitungsschritte der herzustellenden Produkte können bereits während des Transportes und/oder während des Durchlaufens bestimmter Bearbeitungsstationen ausgeführt werden. Damit sind eine bauliche Verkürzung der Produktionslinie und/oder eine Verkürzung der Produktionszeit erzielbar.

Bevorzugt weist der Antrieb des Transportwagens eine Fortbewegungseinrichtung mit zumindest einem angetriebenen Antriebselement zur Fortbewegung des Transportwagens gegenüber einem Bahnelement oder einer Bahn eines Transportsystems auf.

Bahn und/oder Bahnelement sind insbesondere räumlich fest installiert.

Das Antriebselement als Teil des Antriebes von dem Transportwagen kann unabhängig von dem Rest des Transportsystems in eine Bewegung versetzt werden und den Transportwagen so gegenüber einer Bahn oder einem Bahnelement, das seinerseits passiv sein kann, also keinen Antrieb und keine Antriebseinrichtung umfassen muss, bewegen.

Das Antriebselement ist so ausgeführt, dass es für einen sicheren, schlupffreien und positionierungsgenauen Transport des Transportwagens sorgt.

Bei dem Antriebselement kann es sich um ein elektro-magnetisches Antriebselement oder um ein mechanisches Antriebselement handeln, vorzugsweise handelt es sich um ein Ritzel oder ein Reibrad.

Das Antriebselement wirkt während des Betriebes bevorzugt mit einem entsprechenden Gegenstück auf einem Bahnelement oder auf einer Bahn zusammen, beispielweise das Ritzel mit einer Zahnstange, das Reibrad mit einer Reibauflage, oder elektromagnetisch wirkende Komponenten, wie Spule oder Magnet, bei einer elektromagnetischen Kopplung .

Die Bahn oder das Bahnelement kann daher sehr einfach aufgebaut werden. Das betrifft zum einen die Komplexität der Ausführung, beispielsweise sind keine beweglichen Teile notwendig, zum anderen die Komplexität der Streckenführung. Die Bahn muss nicht mehr exakt von einem präzise positionierten Formentisch zu einem anderen präzise positionierten Formentisch führen, wobei die Strecken und Geschwindigkeiten aneinander anzupassen sind und eine Abgabe an den sowie eine Aufnahme von dem Formentisch nötig ist.

Vielmehr kann die Fortbewegung und die präzise Positionierung der Formen von dem Transportwagen übernommen werden. Der Transport kann damit individuell an bestimmte Formen angepasst werden, ohne dass das gesamte Transportsystem umgerüstet werden muss.

Der Transportwagen weist vorteilhafterweise einen Rahmen oder Rahmenelemente auf, auf welchen eine Antriebsvorrichtung und/oder ein Antriebselement angebracht sind.

Ein Rahmenteil des Transportwagens kann gegenüber einem anderen Rahmenteil des Transportwagens mittels einer steuerbaren Arretiereinrichtung wahlweise arretierbar oder um eine Achse quer zu einer Längsrichtung des Transportsystems frei beweglich mit dem anderen Rahmenteil verbunden ist. Dadurch kann beispielweise ein Rahmenteil seine Position im Transportsystem beibehalten, während ein anderer Rahmenteil verschoben, verdreht oder gekippt wird.

In einer vorzugsweisen Ausbildung der Erfindung ist der Transportwagen mit elektrischen Betriebselementen ausgestattet.

Der Transportwagen weist insbesondere einen elektrischen Antrieb auf, das heisst einen Antrieb, der mit einer elektrischen Versorgung betrieben wird.

Der Transportwagen weist vorzugsweise ein elektrisches Kontaktelement zur zumindest temporären elektrischen Verbindung des Transportwagens mit einer externen Stromversorgung auf oder wird durch eine kontaktlose, z.B. induktive oder kapazitive, Übertragung versorgt.

Das Kontaktelement kann so ausführt sein, dass eine Energieversorgung während einer Bewegung des Transportwagens, insbesondere während des Transports einer Form, ermöglicht wird.

Dazu kann beispielsweise das Antriebselement aus zwei axial beabstandeten Abschnitten bestehen, zwischen welchen ein elektrisches Kontaktelement angeordnet ist.

Vorzugsweise ist ein elektrischer Energiespeicher vorgesehen, der insbesondere über die externe Stromversorgung und das elektrische Kontaktelement aufladbar ist.

Über den Energiespeicher als Pufferbatterie können kurzzeitige Stromausfälle ohne Transportunterbrechung oder auch Abschnitte der Fertigungsstrasse ohne Stromversorgung überbrückt werden.

Der Energiespeicher kann auch gross genug ausgeführt sein, dass das Antriebssystem und/oder eine Steuereinheit über einen längeren Zeitraum versorgt werden können.

Damit ist einerseits ein bewährter und sauberer Antrieb für den Lebensmittelbereich gewährleistet, mit einer einfachen Energieversorgung an bestimmten Positionen bzw. während prozessbedingter Verweilzeiten.

Der Transportwagen kann ausserdem über eine Temperiereinrichtung zum Wärmen und/oder Kühlen der Formen verfügen, die ein elektrisches Betriebselement des Transportwagens bildet und zum Beispiel über ein Kontaktelement und/oder einen elektrischen Energiespeicher versorgt wird.

Die Temperiereinrichtung kann den Strom direkt zum Heizen oder Kühlen der Formen verwenden oder ein Fluidsystem mit einem Temperierfluid aufweisen.

In einer vorteilhaften Ausführung der Erfindung weist der Transportwagen mindestens ein Führungselement auf, das mit einer vorzugsweise mechanischen Führung des Transportsystems zusammenwirkt. Das Führungselement kann mit der Führung mechanisch zusammenwirken, elektromagnetisch ankoppeln oder ein Sensor sein, der ein vorgegebenes Signal detektiert, beispielsweise eine Linie oder ein Lichtsignal mit bestimmter Farbe, den Abstand zu einer Referenzfläche oder ähnliches.

Die Führungselement und die Führung sorgen beispielsweise dafür, dass das Antriebselement in Kontakt mit dem Gegenstück bleibt und eine Fortbewegung des Transportwagens gewährleistet wird.

Das Antriebselement kann so ausgeführt sein, dass es selbst als Führungselement wirkt.

Das Führungselement kann, zum Beispiel, als Rolle, auf dem Rahmen oder einem Rahmenteil montiert sein oder Teil des eines Rahmenteils sein.

Vorteilhafterweise weist der Transportwagen ein bevorzugt mit dem Antrieb gekoppeltes Steuersystem auf. Mittels des Steuersystems kann während des Betriebes Einfluss auf den Antrieb und damit auf die Bewegung des Transportwagens und/oder der Form genommen werden.

Das Steuersystem umfasst bevorzugt eine Sende- und Empfangseinheit zur Kommunikation mit zumindest einem anderen Steuersystem.

Insbesondere kann eine Kommunikation mit einem Steuersystem eines anderen Transportwagens, mit einem Steuersystem eines Transportsystems und/oder mit einem Steuersystem zumindest einer der Bearbeitungsstationen einer Fertigungsstrasse vorgesehen sein.

Mit dem Steuersystem kann der Fertigungsprozess trotz der autonomen Transportwagen sicher und genau überwacht und gesteuert werden.

Gleichzeitig kann die Annäherung an die Bearbeitungsstationen, das Verweilen an den und zwischen den Bearbeitungsstationen sowie die Bearbeitung der Lebensmittelmasse in der Form flexibel an die aktuellen Bedingungen und Erfordernisse angepasst werden. In einer vorteilhaften Ausführung weist der Transportwagen einen Annäherungssensor für einen anderen Transportwagen auf. Damit können Auffahrkollisionen der an sich autonom verfahrbaren Transportwagen vermieden und deren gegenseitiger Minimal-Abstand optimal an den jeweiligen Transport- bzw. Fertigungsvorgang abgestimmt werden.

In der erfindungsgemäßen Ausführung des Transportwagens ist zwischen dem Rahmen oder einem Rahmenteil des Transportwagen und zu transportierender Form eine Halteanordnung für die Fixierung, die Positionskontrolle und/oder Zentrierung der Form, eine Federanordnung und/oder eine Dämpferanordnung zwischengeschaltet. Insbesondere ist eine Formenaufnahme vorgesehen, die entsprechend ausgerüstet ist.

Die Formenaufnahme kann beispielsweise gefedert gelagerte Steckpins umfassen, die in Ausnehmungen der Form eingreifen.

Die eingangs dargelegte Aufgabe wird gemäss einem weiteren Aspekt der Erfindung durch ein Modul zum Aufbau eines Transportsystems in einer Fertigungsstrasse für Süsswaren, im Speziellen von Schokoladenprodukten gelöst. Das Modul umfasst mindestens ein Bahnelement zur Wegvorgabe für mindestens einen entlang des Bahnelements verfahrbaren, wie oben beschriebenen Transportwagen. Das Bahnelement ist für eine operative Wechselwirkung mit einem Antriebselement des Transportwagens ausgebildet, so dass der Transportwagen kraft seines Antriebes entlang des Bahnelements verfahrbar ist.

Insbesondere weist das Bahnelement eine Verzahnung, Schiene und/oder Nut auf.

Das Modul hat bevorzugt keine beweglichen Teile und weist somit ein Bahnelement auf, welches ein passives Gegenstück zu dem Antriebselement des Transportwagens bildet.

Das Modul ermöglicht daher eine grosse Flexibilität in der Auslegung und Gestaltung des Transportsystems und damit auch der gesamten Fertigungsanlage, wobei gleichzeitig eine hohe Positionsgenauigkeit der Transportwagen und damit ein genau kontrollierbarer Transport und Fertigungsablauf gegeben ist.

Vorzugsweise weist das Modul eine Zahnstange auf, die insbesondere mit einem angetriebenen Ritzel eines Transportwagens zusammenwirkt.

Das Modul umfasst bevorzugt eine insbesondere mechanische Führung für entlang dieser Führung verfahrbare Transportwagen. Das Bahnelement kann so ausgestaltet sein dass es gleichzeitig als Gegenstück zum Antriebselement und als Führung wirkt. Mit Hilfe der Führung kann die Weggebung auf dem Modul sehr präzise erfolgen.

Das Modul kann ein Bahnelement aufweisen, welches eine Fortbewegung in einer Richtung entlang Längsachse des Moduls vorgibt. Alternativ oder zusätzlich kann ein Bahnelement vorgesehen sein, das eine Richtungsänderung vorgibt und/oder das als Weiche für alternative Wegführungen fungiert.

Das Modul kann mit mehreren Bahnelementen ausgestattet sein, die gleichzeitig eine parallele oder gegenläufige Bewegung von Transportwagen ermöglichen.

Das Modul kann mit einer Abdeckhaube ausgestattet sein, kann eine Klimakammer und/oder eine Temperiervorrichtung umfassen. Der Formentransport kann daher unter hygienisch einwandfreien Bedingungen durchgeführt werden. Die Formen und/oder die in den Formen befindliche Lebensmittelmasse kann während des Transports thermisch für die nächste Behandlungsstation vorbereitet werden.

Ein derartiges Modul ist bevorzugt dadurch gekennzeichnet, dass ein elektrisches Kontaktelement zu den Transportwagen vorgesehen ist, vorzugsweise in Form einer Stromschiene, die sich über zumindest einen Längsabschnitt des Moduls erstreckt und an die ein elektrisches Kontaktelement des Transportwagens operativ ankoppelbar ist.

Vorteilhafterweise ist das Modul mit mindestens einem weiteren Modul verbindbar, insbesondere in Längsrichtung. Verbundenen Module bilden eine Modulbahn.

Gemäss einem weiteren Aspekt der Erfindung ist zur Lösung der gestellten Aufgabe ein Transportsystem vorgesehen, insbesondere zur Fortbewegung von Formen bei der Herstellung von Süsswaren, im speziellen von Schokoladenprodukten, mit einer zumindest zwei Bearbeitungsstationen verbindenden Bahn und mindestens einem entlang dieser Bahn verfahrbaren Transportwagen wie er zuvor beschrieben wurde.

Die Bahn kann ein aktiv betriebenes Fortbewegungsmittel umfassen, beispielsweise eine Kette oder ein Band, auf dem ein Transportwagen aufliegt oder eingeklinkt ist. Der Transportwagen benötigt dann nicht unbedingt eine Fortbewegungseinrichtung, kann aber Funktionen übernehmen, die in bekannten Transportsystemen von Bearbeitungsvorrichtungen oder Formentischen übernommen wurden, beispielsweise eine exakte Positionierung an einer Giessmaschine, ein Rütteln der Form oder ein Wenden der Form.

Alternativ kann die Bahn passiv ausgeführt sein, insbesondere für eine operative Wechselwirkung mit einem Antriebselement des Transportwagens ausgebildet sein, so dass der Transportwagen kraft seines Antriebes entlang des Bahnelements verfahrbar ist.

Die Aufgabe wird dann gelöst durch ein Transportsystem, insbesondere ein Transportsystem wie oben beschrieben ist, insbesondere zur Fortbewegung von Formen bei der Herstellung von Süsswaren, im speziellen von Schokoladenprodukten, mit einer zumindest zwei Bearbeitungsstationen verbindenden Bahn, mindestens einem entlang dieser Bahn verfahrbaren Transportwagen, sowie einem Steuersystem für das Transportsystem. Erfindungsgemäss ist die Bahn für eine operative Wechselwirkung mit einem Antriebselement des Transportwagens ausgebildet, so dass der Transportwagen kraft eines eigenen Antriebs entlang des Bahnelements verfahrbar ist.

Die Bahn weist dazu insbesondere eine Verzahnung, Schiene und/oder Nut auf. Vorzugsweise weist die Bahn eine Zahnstange auf, die insbesondere mit einem angetriebenen Ritzel eines Transportwagens zusammenwirkt.

Der Antrieb für die Fortbewegung des Transportwagens ist auf dem Transportwagen vorgesehen, der über en Antriebselement zur Fortbewegung gegenüber der Bahn verfügt.

Bevorzugt handelt es sich um einen elektrischen Antrieb.

In einer günstigen Ausführung des Transportsystems weist die Bahn an zumindest einer Position eine elektrische Stromversorgungsstation zur zumindest temporären elektrischen Ankoppelung der Transportwagen auf, vorzugsweise in Form einer Stromschiene, die sich über zumindest einen Längsabschnitt der Bahn erstreckt und an die ein elektrisches Kontaktelement des Transportwagens operativ angekoppelt ist.

In einer vorteilhaften Ausführung umfasst das Transportsystem Module, wie sie oben beschrieben sind. Die Bahn des Transportsystems ist dabei aus Bahnelementen der Module zusammengefügt.

Mit einer aus Bahnelementen der Module zusammengesetzten Bahn werden bei Transportsystem eine besonders hohe Freiheit in der Auslegung des Transportsystems und insbesondere auch die einfache nachträgliche Veränderung des Systems erreicht. Eine Fertigungsstrasse kann einfach verändert und erweitert werden, indem Module gewechselt, entnommen oder hinzugefügt werden. Auf diese Weise kann leicht auf eine andere Produktart umgestellt oder der Durchsatz verändert werden.

Das Transportsystem umfasst vorteilhafterweise ausserdem Module zum Einschleusen und/oder Module zum Ausschleusen von Transportwagen. Mit diesen kann die Anzahl der bewegten Transportwagen an den jeweiligen Ablauf angepasst werden, beispielsweise die Anzahl vergrössert werden, wenn der Durchsatz erhöht werden soll, oder die Anzahl verkleinert werden, wenn die entsprechende Charge fertiggestellt ist, die Transportwagen gereinigt werden müssen oder in einem anderen Transportsystem eingesetzt werden sollen.

Die der Erfindung zugrundeliegende Aufgabe wird ausserdem gelöst durch eine Fertigungsstrasse für Süsswaren, im Speziellen von Schokoladeprodukten, mit zumindest zwei Bearbeitungsstationen und mit einer Mehrzahl von zwischen den Bearbeitungsstationen beförderbaren Formen. In der erfindungsgemässen Fertigungstrasse werden die Formen mit Transportwagen mit eigenem Antrieb wie oben beschrieben transportiert. Alternativ oder zusätzlich umfasst die erfindungsgemässe Fertigungsstrasse ein Transportsystem wie es oben beschrieben ist.

Die Fertigungsstrasse umfasst somit flexible einsetzbare Komponenten und lässt sich leicht umrüsten. Die Vorteile einer derartigen erfindungsgemässen Fertigungsstrasse ergeben aus den vorstehenden Erläuterungen zu deren Einzelkomponenten.

Die Aufgabe wird ausserdem gelöst durch eine Verwendung von Transportwagen mit einem eigenen Antrieb, insbesondere wie sie oben beschrieben sind, zum Transport von Formen zwischen zwei Bearbeitungsstationen in einer Fertigungsstrasse für Süsswaren, im Speziellen von Schokoladeprodukten. Die Fertigungsstrasse enthält bevorzugt ein Transportsystem, wie es oben beschrieben ist.

Die Aufgabe wird zudem gelöst durch ein Verfahren zum Transportieren einer Form zwischen zwei Bearbeitungsstationen in einer Fertigungsstrasse für Süsswaren, im Speziellen von Schokoladeprodukten, wobei die Form mit einen Transportwagen mit einem Antrieb, insbesondere wie oben beschrieben ist, befördert wird, insbesondere entlang eines Bahnelements in einem Modul wie oben beschrieben oder entlang einer Bahn in einem Transportsystems wie oben beschrieben.

Die Form wird bevorzugt entlang eines Bahnelementes in horizontaler und vertikaler Richtung und/oder vorwärts und rückwärts verfahren. Dazu fährt der Transportwagen entlang entsprechend eingerichteter Bahnelemente.

Insbesondere werden mindestens zwei Formen transportiert, wobei mindestens zwei Transportwagen unabhängig voneinander verfahren werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine beispielhafte Ausführungsform eines erfindungsgemässen Transportsystems in perspektivischer Ansicht, mit einem ersten Beispiel für einen erfindungsgemässen Transportwagen auf einem ersten Beispiel für ein Modul;
- Fig. 2: eine perspektivische Ansicht des Transportwagens gemöss Fig. 1;
- Fig. 3: eine Vorderansicht des Transportsystems der Fig. 1, wobei auch weitere Details des erfindungsgemässen Transportwagens nach Fig. 2 zumindest schematisch dargestellt sind;
- Fig. 4: eine perspektivische Ansicht eines Moduls für ein erfindungsgemässes Transportsystems mit einem Transportwagen gemäss Fig. 1 in gekippter Stellung;
- Fig. 5: eine perspektivische Ansicht eines aus zwei gleichartigen Modulen aufgebauten Transportsystems mit drei Transportwagen entsprechend der Fig. 1;
- Fig. 6: in vergrösserter Detailansicht eine Variante der Montage einer Form auf einem Transportwagen gemäss Fig. 2;
- Fig. 7: in vergrösserter Detailansicht eine weitere Variante der Montage einer Form auf einem Transportwagen gemäss Fig. 2;
- Fig. 8: eine vergrösserte Detaildarstellung einer vorteilhaften Ausführungsform für die antriebsmässige Kopplung von Transportwagen und Bahnelement sowie für die Energieübertragung;
- Fig. 9: schematisch alle mit dem erfindungsgemässen Transportsystem möglichen Freiheitsgrade des Transportes und der Bewegung für die Formen; und
- Fig. 10: eine schematische Darstellung einer Fertigungsstrasse für Süsswaren unter Verwendung des erfindungsgemässen Transportsystems;
- Fig. 11: eine erste perspektivische Ansicht eines zweiten Beispiels für einen erfindungsgemässen Transportwagen;
- Fig. 12: eine zweite perspektivische Ansicht des zweiten Beispiels für einen erfindungsgemässen Transportwagen;
- Fig. 13: eine perspektivische Ansicht eines weiteren Beispiels für ein Modul mit einem Transportwagen gemäss Fig. 11 und 12.

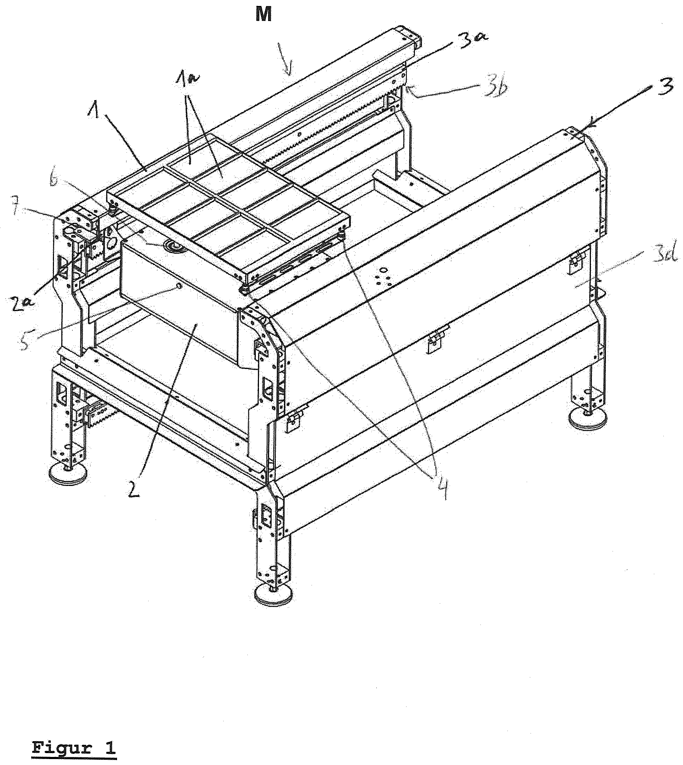

Fig. 1 zeigt eine beispielhafte Ausführungsform eines erfindungsgemässen Transportsystems 100 für die Herstellung von Süsswaren, insbesondere für die Herstellung von Schokolade in perspektivischer Ansicht, mit einem ersten Beispiel für einen erfindungsgemässen Transportwagen 2 auf einem ersten Beispiel für ein Modul M.

Dabei sind die Formen 1 für die Süsswaren, beispielsweise für in die Kavitäten 1a gegossene Schokoladetafeln, auf jeweils einem selbstfahrenden, angetriebenen Transportwagen 2 aufgenommen und werden entlang einem Bahnelement 3 transportiert.

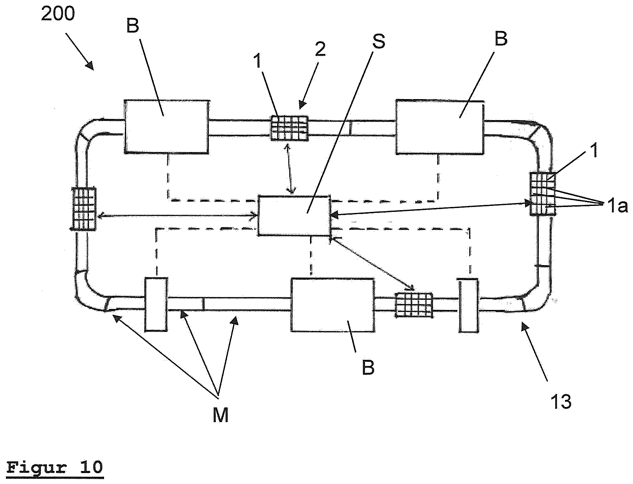

Die Module M, die auch eine Basisstruktur in Form eines Gestells 3d aufweisen können, werden derart verbunden, dass die Bahnelemente 3 eine zumindest zwei Bearbeitungsstationen B (siehe dazu Fig. 10) verbindende Bahn 13 bilden, gegebenenfalls auch unter Zwischenschaltung von gebogenen Bahnelementen oder Modulen.

Der Transportwagen 2 kann durch seinen eigenen Antrieb, vorzugsweise einen Elektroantrieb, auf Schienen 3a der Bahnelemente 3 in der Längsrichtung vorwärts und rückwärts und/oder hoch und runter verfahren werden.

Dazu ist er mit Führungselementen 2a in Form von auf den Schienen 3a abgestützten Rollen versehen, die das Gewicht von Transportwagen 2, Form 1 und Süsswaren tragen.

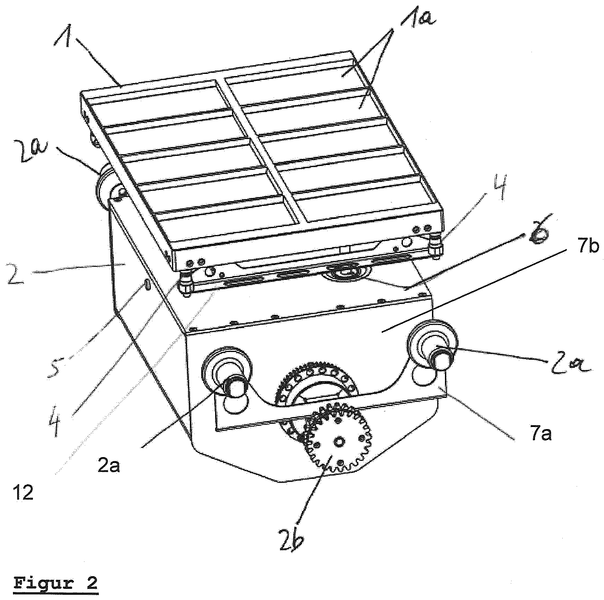

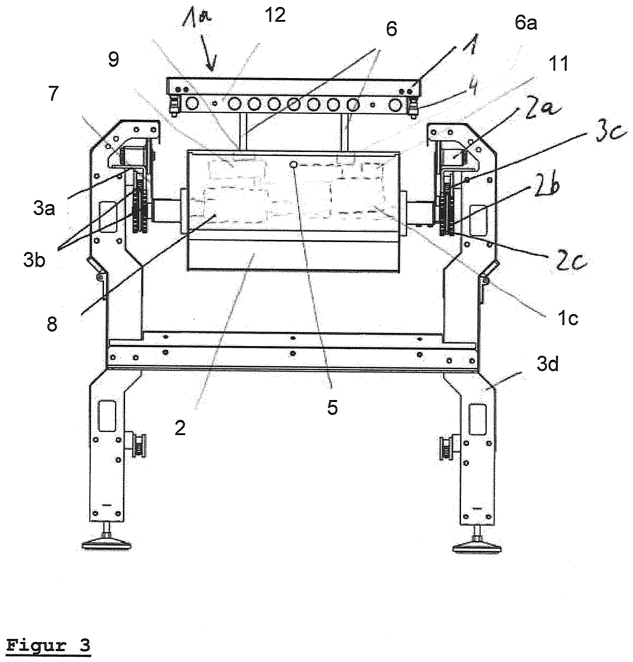

Der Transportwagen 2 verfügt über einen Elektroantrieb. Zum zumindest auf geraden Abschnitten des Bahnelements 3 vorgesehenen Antrieb mit formschlüssiger Momentenübertragung zwischen Transportwagen 2 und Führungsbahn 3 ist der Transportwagen 2 mit zumindest einem Antriebselement 2b in Form eines Ritzel bzw. eines Zahnrads versehen (siehe insbesondere Figuren 2 und 3).

Das Antriebselement 2b wird von einem Elektromotor 8 (siehe Fig. 3) angetrieben, so dass der Transportwagen 2 kraft seines Antriebs entlang des Bahnelements 3 verfahrbar ist.

Das Bahnelement 3 des Moduls M ist für eine operative Wechselwirkung mit einem Antriebselement 2d des Transportwagens 2 ausgebildet. Im gezeigten Beispiel greift das Antriebselement 2d in eine Verzahnung 3b oder Zahnstange vorzugsweise an der Unterseite der Schienen 3a ein.

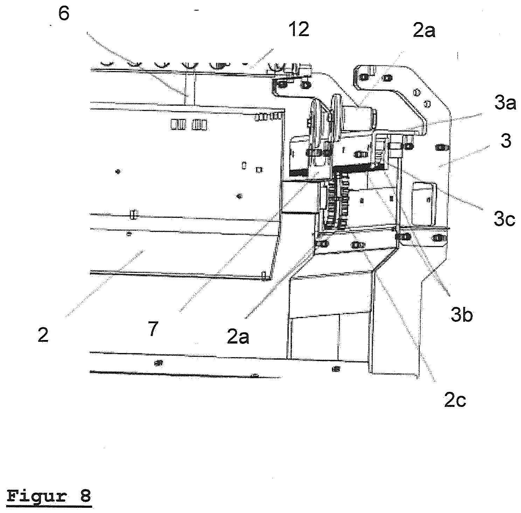

Die Energie für den Antrieb der Transportwagen 2 kann berührungslos, etwa über Induktion, oder auch über Schleifkontakte von der Schiene 3a oder anderen Strukturen der Bahnelemente 3 übertragen werden. Eine andere, bevorzugte Variante ist in Fig. 3 und in vergrösserter Darstellung in Fig. 8 zu sehen.

Das Antriebselement in Form eines Ritzels 2b an jeder Seite des Transportwagens 2 ist dabei axial geteilt ausgeführt. Zwischen diesen benachbart liegenden Zahnrädern des Ritzels 2b ist ein elektrisches Kontaktelement 2c in Form eines Kontaktrads vorgesehen, das an einer Stromschiene 3c anliegt. Diese Stromschiene 3c ragt zwischen der komplementär zu den geteilten Zahnrädern des Ritzels 2b parallelen Verzahnungen 3b hervor und kann ebenfalls Teil der Schienen 3a oder der Bahnelemente 3 allgemein sein.

In Fig. 8 ist diese vorteilhafte Ausführungsform der Erfindung in vergrössertem Massstab und aus einer anderen Blickrichtung nochmals dargestellt.

Ein elektrischer Energiespeicher 9 kann im Transportwagen 2 vorhanden sein, um als Pufferbatterie kurzzeitige Stromausfälle ohne Transportunterbrechung zu überbrücken. Der Energiespeicher 9 kann aber auch dazu dienen, um Abschnitte ohne Stromversorgung zu passieren oder um die Transportwagen 2 überhaupt autark beweglich zu machen. Hierbei ist eine Energieversorgung an bestimmten Positionen oder Ladestationen bzw. während prozessbedingter Verweilzeiten an bestimmten Bearbeitungsstationen B vorteilhaft.

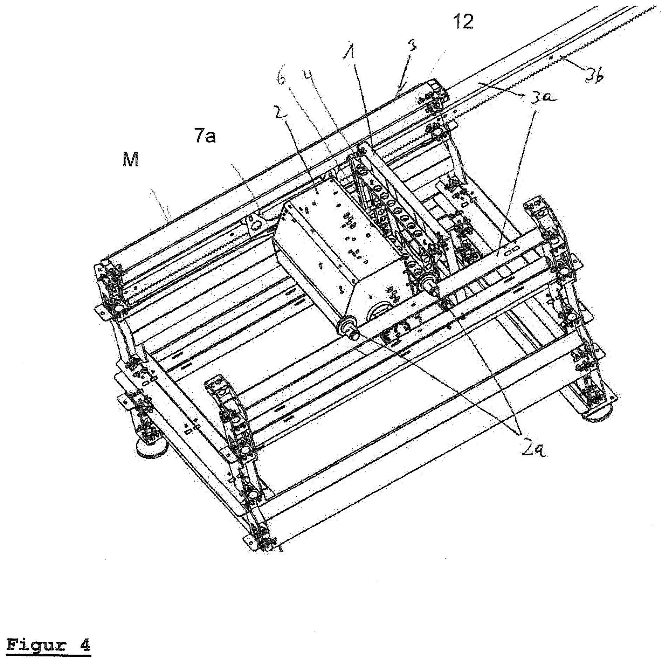

Fig. 2 lässt deutlich auch die Montage der Rollen 2a an einem ersten Rahmenteil 7a erkennen. Mittels einer steuerbaren Arretiereinrichtung lässt sich der erste Rahmenteil 7a gegenüber einen zweiten Rahmenteil 7b des Transportwagens 2 fixieren oder freigeben. Bei freigegebenem Rahmenteil 7a bewirkt eine Betätigung des auf das Ritzel 2b wirkenden Antriebs eine rotatorische Bewegung des zweiten Rahmenteils 7b des Transportwagens 2 mitsamt der Form 1 um die Achse des Ritzels 2b (siehe Fig. 4).

Dabei werden vorteilhafterweise die Rollen 2a auch durch eine ansteuerbare Bremseinrichtung fixiert. Sobald bzw. solange der Rahmen 7 über die Arretiereinrichtung, vorzugsweise ebenfalls mit elektrischem Antrieb, gegenüber dem Gehäuse des Transportwagens 2 fixiert ist, kann über das Ritzel 2b das Antriebsmoment zwischen Transportwagen 2 und Bahnelement 3 oder Bahn 13 übertragen und der Transportwagen 2 somit in der jeweiligen rotativen Position entlang der Führungsbahn 3 translatorisch bewegt werden.

Alternativ dazu könnte die translatorische und die rotatorische Bewegung des Transportwagens 2 auf andere Weise, unter Ausnutzung des axial geteilten Ritzels 2b aber mit konstant beweglich am Transportwagen 2 montierten Rahmenteil 7b oder direkt daran montierten Rollen 2a, bewerkstelligt werden.

Wenn beide Zahnräder des Ritzels 2b, die über koaxiale Wellen mit unabhängig voneinander steuerbaren Antrieben verbunden sind, in gleichem Rotationssinn und gleicher Geschwindigkeit angetrieben werden, bewirkt dies die translatorische Bewegung des Transportwagens 2 auf dem Bahnelement 3 oder der Bahn 13. Wenn jedoch eines der Zahnräder des Ritzels 2b in Bezug auf das zweite Rahmenteil 7b des Transportwagens 2 fixiert ist und die Antriebseinrichtung des anderen Zahnrads des Ritzels 2b betätigt wird, bewirkt dies die rotatorische Bewegung des Transportwagens 2 um die Achse des Ritzels 2b an der durch das fixierte Zahnrad des Ritzels 2b translatorisch fixierten Position.

Die Bewegungssteuerung der Transportwagen 2 wird über ein in den Transportwagen 2 eingebautes Steuersystem 10 übernommen. Dieses Steuersystem 10 steuert den Antrieb (Elektromotor 8) und alle damit verbundenen Funktionen, wie beispielsweise die Aktivierung des Energiespeichers 9 (Pufferbatterie) und auch die Umschaltung von translatorischer zu rotatorischer Bewegung und vieles mehr. Darüber hinaus wird über das Steuersystem 10 auch die Bewegung der Transportwagen 2 relativ zueinander und innerhalb des Transportsystems 100 und der Fertigungsstrasse 200 mit ihren Bearbeitungsstationen B abgestimmt.

Damit die Transportwagen 2 Informationen zumindest über ihre relative Position in Bezug auf andere Transportwagen 2 austauschen können, ist ein Annäherungssensor 5 mit dem Steuersystem 10 verbunden. Damit können jedenfalls Auffahrkollisionen der an sich autonom verfahrbaren Transportwagen 2 vermieden werden.

Wenn der Transportwagen 2 alternativ zum Annäherungssensor 5 oder zusätzlich dazu mit Sende- und Empfangseinheiten 11 versehen ist, die gesteuert über das Steuersystem 10 mit den Steuersystemen 10 anderer Transportwagen 2 kommunizieren können, sind feinere Bewegungsabstimmungen und -anpassungen der Transportwagen 2 möglich. Zumindest wird eine Kommunikation der Steuersysteme 10 der jeweils nächstliegenden, vorhergehenden und/oder nachfolgenden, Transportwagen 2 untereinander vorgesehen sein. Die gesamte Logik dazu ist im Steuersystem 10 des Transportwagens 2 programmiert.

Die Kommunikation mit dem Steuersystem S des gesamten Transportsystems 100 (siehe Fig. 10) und/oder den jeweiligen Bearbeitungsstationen B erlaubt eine zentrale die Positions- und Bewegungskontrolle, in Ausnahmesituationen Eingriffe in den ansonsten autonom ablaufenden Transport der Formen 1 oder Anpassungen des Transports bei Änderung des Bearbeitungsablaufes in der Fertigungsstrasse.

Prinzipiell muss keine übergeordnete Steuerung alle Positionen und Bearbeitungsschritte koordinieren, da der Transportwagen 2 selbst sein Eintreffen bei einer Bearbeitungsstation B melden kann. Nach Abschluss des jeweiligen Arbeitsschrittes kann die Bearbeitungsstation B an den Transportwagen 2 kommunizieren, dass ein Weitertransport der Form 1 erfolgen kann bzw.
soll.

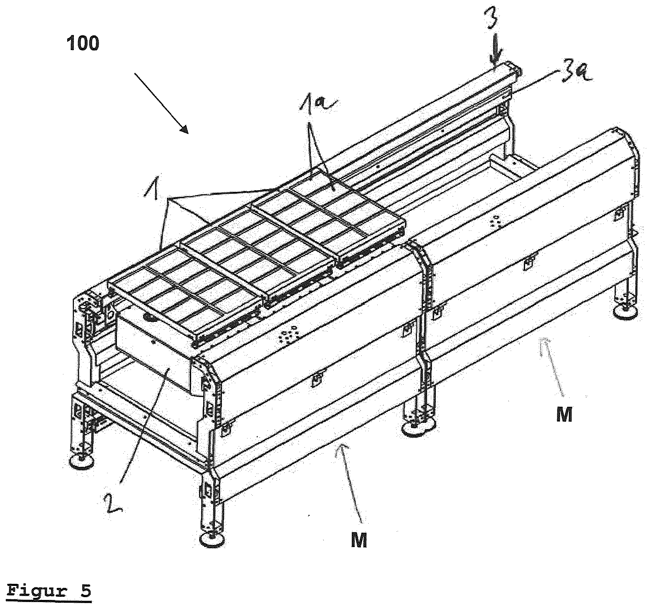

In Fig. 5 sind zwei miteinander gekoppelte Module M mit Bahnelementen 3, die einander zu einer ineinander übergehenden Bahn 13 ergänzen, als Beispiel dargestellt, dass das erfindungsgemässe Transportsystem 100 modular und beliebig konfigurierbar in Anzahl und Länge der Abschnitte der Bahn 13 aufgebaut ist.

Auch gekrümmte Abschnitte (siehe wieder Fig. 10) oder Abschnitte mit Steigungen und Gefälle sowie einer vertikalen Transportrichtung sind möglich.

Das Antriebselement 2b jedes Transportwagens 2 kann in gebogenen Abschnitten der Bahn 13 gegebenenfalls nur über Kraftschluss mit der Bahn 13 gekoppelt sein, während in den geraden Abschnitten die Antriebsmomente vorzugsweise durch Formschluss übertragen werden.

Die Form 1 kann entweder direkt auf dem Transportwagen 2 liegen oder vorzugsweise auf einer Formenaufnahme 12 in Form eines Formrahmens befestigt sein, über welchen dann auch die Positionierung und/oder Zentrierung erfolgt, so dass über die exakt vorgebbare Position des Transportwagens 2 entlang der Bahn 13 und die relativ zum Transportwagen 2 festgelegte Position der Form 1 für jede Bearbeitungsstation B die Form 1 allein durch den Transportwagen 2 exakt positioniert werden kann, ohne sie vom Transportwagen 2 abheben und separat ausrichten zu müssen.

So wären die Sauberkeit und die Massgenauigkeit der Formenseitenflächen nicht mehr so wichtig. Weiterhin bietet die Formenaufnahme 12 der Form 1 den Vorteil, dass, was auch auf dem Transportwagen 2 allein möglich wäre, zwischen Form 1 und Transportwagen 2 Federelemente 4 in unterschiedlichen Ausführungsformen zwischengeschaltet werden können.

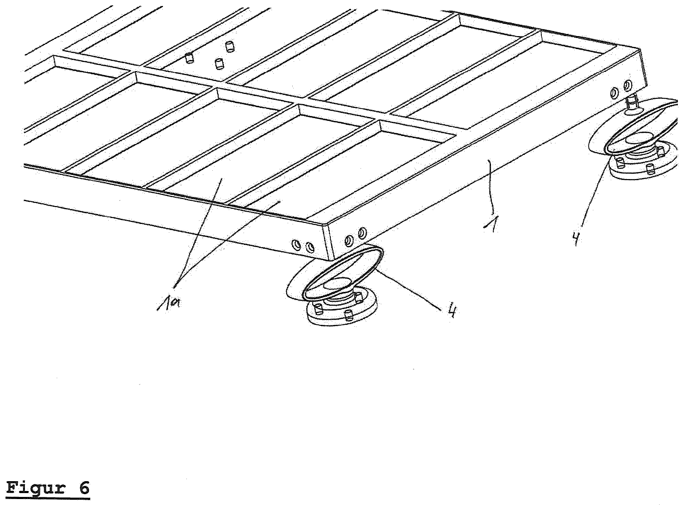

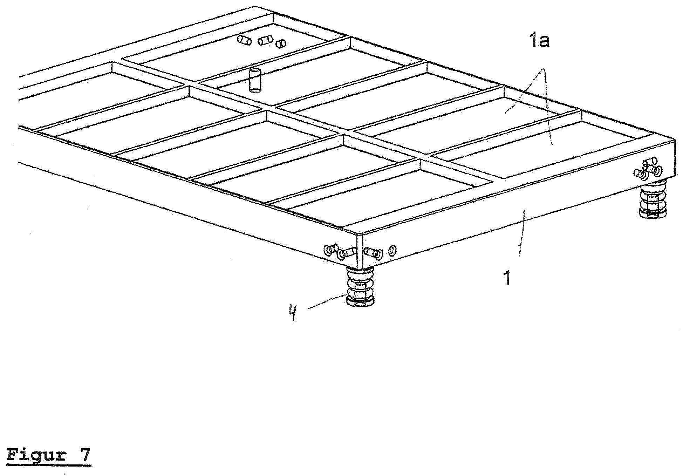

So zeigt Fig. 6 eine Variante mit elliptischen Blattfedern als Federelemente 4 und Fig. 7 zeigt eine Ausführungsform mit Schraubenfedern als Federelemente 4.

Über Zapfen, Kegel, Konusse oder dergleichen und komplementäre Aufnahmen am jeweils gegenüberliegenden Bauteil kann auch eine Zentrierung und Positionsausrichtung der Form 1 sowie gegebenenfalls deren Verriegelung auf dem Transportwagen 2 erfolgen, insbesondere im Zuge des Aufsetzens und Herunterdrückens der Form 1 auf den Transportwagen 2. Alternativ oder zusätzlich können noch Dämpfungsanordnungen zwischen Form 1 und Transportwagen 2 oder Formenaufnahme 12 eingebaut sein.

Der Transportwagen 2 kann andere und/oder weitere Antriebsvorrichtungen 6 enthalten. Diese können über, insbesondere vom Steuersystem 10 oder dem übergeordneten Steuersystem S, allenfalls auch vom Steuersystem der Bearbeitungsstationen B, aktivierbare Zusatzeinrichtungen 6a auf die Form 1 einwirken.

Damit kann der Transportwagen 2 verschiedene Zusatzfunktionen erfüllen und ortsfeste Bearbeitungsstationen ersetzen. So können bei Einsatz von Rütteleinrichtungen am Transportwagen 2 Rüttelstrecken oder Querrüttler entfallen, durch Wendeeinrichtungen, Hebeeinrichtungen oder Verdreheinrichtungen können ortsfeste Formenwender und Formenaushebungen entfallen. Auch kann Transportlänge für die transportierenden Elemente eingespart werden, da beispielsweise bis in den Kühler hinein gerüttelt werden kann. Da mit standardisierten Modulen gearbeitet werden kann, reduzieren sich Herstellungs-, Lagerhaltungs-, Montage- und Wartungsaufwand wesentlich.

Bei Verwendung von Zusatzeinrichtungen wie Motoren, Rüttler, etc. am oder im Transportwagen 2 bietet die beispielhaft in Fig. 6 und Fig. 7 in grösserem Massstab dargestellte Befestigungsart über Federanordnungen 4 und/oder Dämpfungsanordnung sowie Zentrier- und Positioniereinrichtungen grosse Vorteile.

So kann nach dem Auffüllen der Kavitäten 1a in der Form 1 durch ein Vibrieren über eine Vibrationseinrichtung die gesamte Form 1 vibriert werden, damit die eingefüllte Masse sich sauber in den Kavitäten 1a verteilt. Auch kann so die eingeschlossene Luft aus der in die Form 1 eingefüllte Masse herausgelöst werden.

Bevor die vergossenen Produkte in der Form 1 ausgeschlagen werden können, muss die Form 1 in sich etwas verdreht (getwistet) werden. Auch das kann durch entsprechende Betätigungselemente 6a im Transportwagen 2 bewerkstelligt werden. Mit diesem Twisten lösen sich Produkte von den Kavitäten 1a und das Ausschlagen der Produkte wird vereinfacht. Die Form 1 kann mit dieser Befestigung auf dem Transportwagen 2 ohne Ablösen direkt verdreht werden.

Mit den Zusatzfunktionen wie vibrieren, wenden, anheben und absenken wird das System noch flexibler.

So bleibt die Form 1 über die ganze Transportstrecke auf einer Höhe und aufgesetzte Quertransporte können vermieden werden. Oder anders gesagt ist es möglich, über die Strecke des Quertransportes Bearbeitungsprozesse auszuführen. Die Positionen der Aufbauten, wie Ein-/Ausstapler, Formenkontrolle, Giessmaschine, Leckwalze, etc., können auf einem Transportstück frei wählbar montiert werden, wobei nicht darauf geachtet werden muss, dass auszuführende Operationen gleichzeitig geschehen.

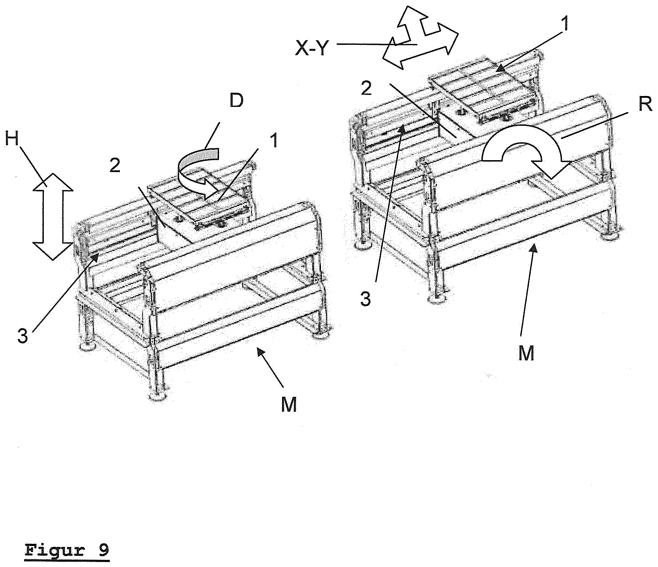

In Fig. 9 sind durch die Pfeile alle möglichen Freiheitsgrade für die Bewegung der Formen 1 mit Hilfe der erfindungsgemässen Transportwagen 2 dargestellt. Im linken Teil der Fig. 9 ist durch den Pfeil T die translatorische Bewegung vor und zurück entlang der Führungsbahn 3 und durch den Pfeil H die Hub- und Absenkbewegung der Form 1 angedeutet. Der gebogene Pfeil D symbolisiert die ebenfalls durch geeignete Betätigungselemente 6a mögliche Drehbewegung um eine Achse senkrecht auf die Ebene der Führungsbahn 3. Im rechten Teil der Fig. 9 ist durch den Pfeil X-Y die Bewegungsmöglichkeit der Form 1 in der Ebene der Bahn 13 symbolisiert, in welchen Richtungen die Form 1 auch vibriert werden kann, und durch den gebogenen Pfeil R die rotatorische Bewegung, gegebenenfalls um 360°, des Transportwagens 2 um die Ritzel-Achse, die eine Schwenkbewegung der Form 1 um eben diese Achse bewirkt.

Es ist denkbar, dass die Transportwagen 2 mittels Weichen umgeleitet werden können. So können sich die Transportwagen 2 über gewisse Strecken auf zwei parallelen Führungsbahnen 3 fortbewegen und die Anlage kann auch in der Breite wachsen und nicht nur in der Länge. So könnten beispielsweise zwei oder mehrere parallele Kühlbahnen vorgesehen sein, so dass man mit halber Kühlbahnhöhe gleich viele Formen 1 in einem Kühler abkühlen könnte.

Mit dem erfindungsgemässen Transportsystem werden die Vorteile mehrerer bisheriger Transportsysteme gemeinsam erreicht. So wird die Form 1 zuverlässig transportiert, ohne die Flexibilität im Anlagenbau von freilaufenden Formen zu verlieren. Jede Form 1 kann mittels der erfindungsgemässen eigenständigen Transportwagen 2 autonom und weitestgehend unabhängig von den anderen Formen 1 vorwärts oder rückwärts durch die Fertigungsanlage bewegt werden. Die Form 1 kann einfach geschoben, oder auch mit dem Transportwagen 2 gefedert verbunden werden.

Fig. 10 zeigt beispielhaft eine Fertigungsstrasse für die Herstellung von Süsswaren, insbesondere für die Herstellung von Schokolade, bei welchem die Formen 1 für die Süsswaren, beispielsweise in die Kavitäten 1a gegossene Schokoladetafeln, durch einzelne, selbstfahrende angetriebene Transportwagen 2 entlang einer Bahn 13 zwischen mehreren Bearbeitungsstationen B transportiert werden und individuell an den Bearbeitungsstationen B verweilen können.

Bearbeitungsstationen B können auch mehrfach wiederholt unmittelbar nacheinander angefahren werden. So können verschiedene sukzessiv ablaufenden Bearbeitungsprozesse zur Herstellung eines Produkts von derselben Giessmaschine übernommen werden.

Vorzugsweise kommunizieren die Transportwagen 2 mit den Bearbeitungsstationen B, können aber auch mit einem zentralen Steuersystem S (gestrichelt dargestellt) sowie auch untereinander und können während der Fahrt zwischen oder durch die Bearbeitungsstationen B durch an den Transportwagen 2 vorgesehenen Zusatzeinrichtungen zusätzliche Operationen wie z.B. Vibrieren oder Twisten ausführen.

In diese Form 1 kann an einer Bearbeitungsstation B aus einem Giesskopf flüssige Schokolade gegossen werden, wozu die Form 1 typischerweise aus dem Transport, d.h. allenfalls vom Transportwagen 2, gehoben werden und wieder abgesenkt muss, um sie dann weiter zu transportieren.

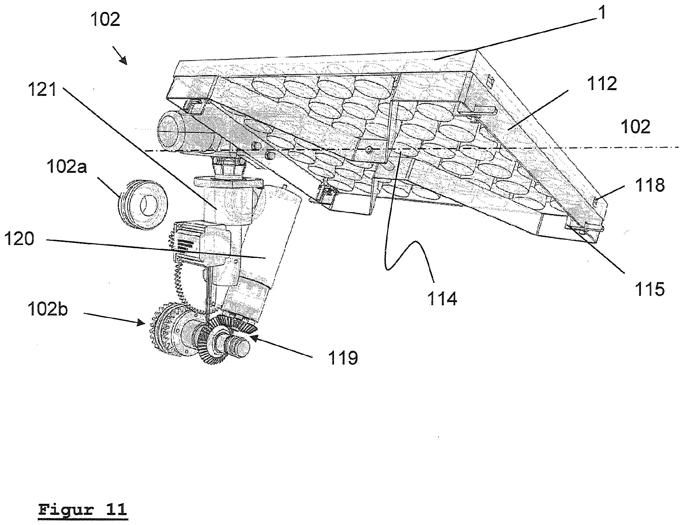

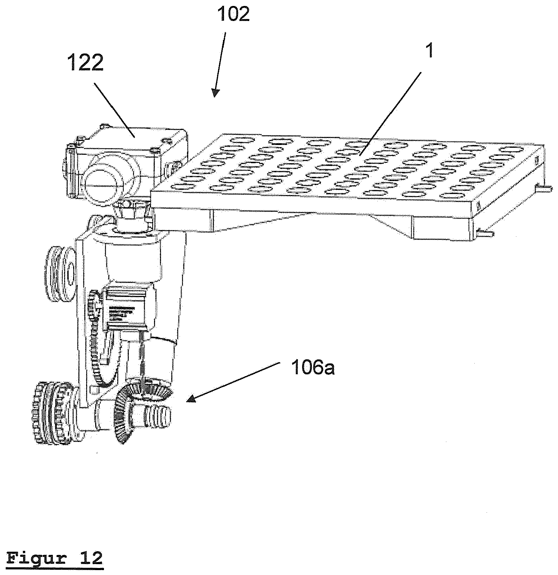

Figur 11 zeigt eine erste perspektivische Ansicht und Figur 12 eine zweite perspektivische Ansicht eines zweiten Beispiels für einen erfindungsgemässen Transportwagen 102.

Der Transportwagen 102 besitzt nur einseitig angebrachte Antriebsvorrichtungen 106 mit einem einseitig angebrachten Antriebselement 102b für die Fortbewegung entlang eines Bahnelements 103.

Zum Kippen der Formenaufnahme 112 und der darauf montierten Form 1 sind Betätigungselemente 106a zum Rotieren der Formenaufnahme 112 vorgesehen.

Die Betätigungselemente 106a umfassen ein Kegelrad-Getriebe 119 zur Übertragung einer Drehbewegung, einen Hubzylinder 120 zum Längenausgleich sowie einen Hubzylinder 121 zum Erzeugen einer Vertikalbewegung.

Ausserdem ist ein Auslegerkopf 122 vorgesehen, in dem sich Betätigungsmittel zum Rütteln und seitlichen Verschieben der Formenaufnahme 112 befinden.

Das Antriebselement 102b ist ähnlich aufgebaut wie das Antriebselement 2b des oben beschriebenen ersten Beispiels.

Der Transportwagen 102 verfügt ebenfalls über Führungselemente 102a, die auf Schienen aufliegen können.

Im Gegensatz zu dem ersten Beispiel rotiert die Formenaufnahme 112 um eine Achse 114, welche durch die Formenaufnahme 112 verläuft und damit nahe an der Form 1 ist. Die Drehung erfolgt platzsparender als im ersten Beispiel.

Beweglichen Haken 115 klinken in Ausnehmungen 118 der Form 1 ein und fixieren die Form 1 an der Formenaufnahme 112. Die Bewegung der Formenaufnahme 112 überträgt sich damit präzise und unmittelbar auf die austauchbare Form 1.

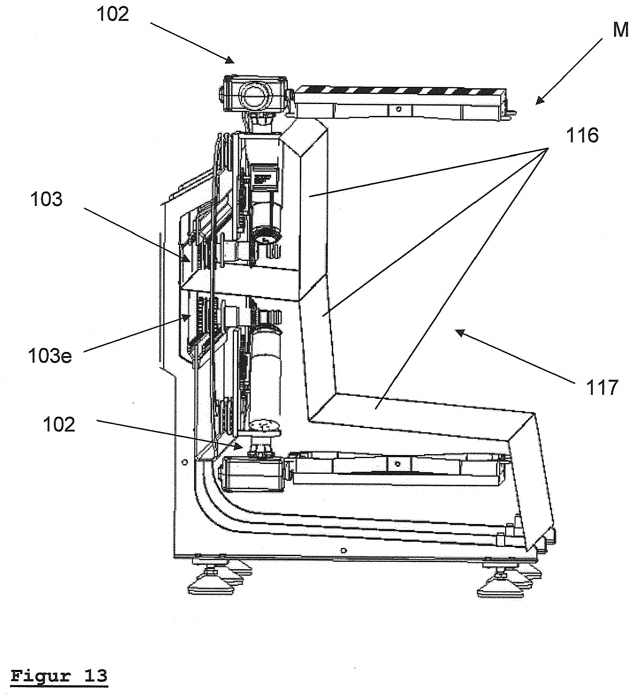

Die einseitig angebrachten Antriebsvorrichtung ermöglicht während des Einsatzes in einem Modul oder in einem Transportsystem einen guten Zugang zu den Formen, wie an Figur 13 ersichtlich ist. Figur 13 zeigt eine perspektivische Ansicht eines weiteren Beispiels für ein Modul mit einem Transportwagen gemäss Figur 11.

Das Modul umfasst ein Bahnelement 103 für eine Betriebsstellung des Transportwagens 102 und eine zweites Bahnelement 103e für eine Rückführung der Transportwagen. Die Bahnelement 103, 103e sind durch Spritzschutzbleche 116 voneinander abgetrennt, die verhindern, dass Süsswarenmasse von einem Transportwagen 102 in Betriebsstellung einen Transportwagen 102 in Rückführposition oder auf das zweite Bahnelement 103e tropft. Gleichzeitig steht ein grosser Bereich 117 zur Verfügung, der für Benutzer zugreifbar ist oder in dem eine Bearbeitungsstation Platz findet.

## Patentansprüche

1. Transportwagen zum Transport von Formen in einem, bevorzugt räumlich fest installierten, Transportsystem (100) in einer Fertigungsstrasse (200) für Süsswaren
mit einer Aufnahme für oder enthaltend mindestens eine Form (1), wobei der Transportwagen (2; 102) mit einem eigenen Antrieb (8, 2b) ausgestattet ist, insbesondere mindestens einen Motor (8) umfasst, **gekennzeichnet dadurch, dass** zwischen dem Rahmen (7) des Transportwagens (2; 102) und zu transportierender Form (1) eine Halteanordnung für die Fixierung, die Positionskontrolle und/oder Zentrierung der Form (1), insbesondere eine Formenaufnahme (12; 112), eine Federanordnung (4) und/oder eine Dämpferanordnung, enthalten ist.

2. Transportwagen nach Anspruch 1, **dadurch gekennzeichnet, dass** der Antrieb des Transportwagens (2; 102) mit zumindest einer Antriebseinrichtung (6) ausgestattet ist, die aus der Gruppe von Fortbewegungseinrichtung, Rütteleinrichtungen, Wendeeinrichtungen, Hebe-und/oder Senkeinrichtungen oder Verdreheinrichtungen gewählt ist und die vorzugsweise über zumindest ein Betätigungselement (6a), zum Beispiel ein mechanisches Kontaktelement, auf die Form (1) einwirkt.

3. Transportwagen nach Anspruch 1 oder 2, **dadurch gekennzeichnet, dass** der Antrieb des Transportwagens (2; 102) eine Fortbewegungseinrichtung mit zumindest einem angetriebenen Antriebselement (2b; 102b) zur Fortbewegung des Transportwagens (2; 102) gegenüber einem Bahnelement (3; 103) oder einer Bahn (13) eines Transportsystems (100) aufweist, vorzugsweise ein Ritzel, ein Reibrad oder ein kontaktloses elektro-magnetisches Antriebselement,
und/oder dass der Transportwagen (2; 102) Führungselemente (2a; 102a) aufweist, die mit einer vorzugsweise mechanischen Führung (3a) eines Bahnelements (3; 103) oder einer Bahn (13) des Transportsystems (100) zusammenwirken.

4. Transportwagen nach Anspruch 1 bis 3, **dadurch gekennzeichnet, dass** der Transportwagen (2; 102) mit elektrischen Betriebselementen ausgestattet ist,
insbesondere mit einem elektrischen Antrieb, mit einem elektrischen Kontaktelement (2c) oder mit einem elektrischen Energiespeicher (9).

5. Transportwagen nach zumindest einem der Ansprüche 1 bis 4, **dadurch gekennzeichnet, dass** der Transportwagen (2; 102) einen Annäherungssensor (5) für einen anderen Transportwagen (2; 102) aufweist.

6. Transportwagen nach zumindest einem der Ansprüche 1 bis 5, **dadurch gekennzeichnet, dass** der Transportwagen (2; 102) ein Steuersystem (10) aufweist, das bevorzugt mit dem Antrieb gekoppelt ist.

7. Transportwagen nach Anspruch 6, **dadurch gekennzeichnet, dass** das Steuersystem (10) eine Sende- und Empfangseinheit (11) zur Kommunikation mit zumindest einem anderen Steuersystem (S, 10) umfasst,
insbesondere zur Kommunikation mit einem Steuersystem (10) eines anderen Transportwagens (2; 102), mit einem Steuersystem (S) des Transportsystems (100) und/oder mit einem Steuersystem (S) zumindest einer der Bearbeitungsstationen (B) einer Fertigungsstrasse (200).

8. Modul zum Aufbau eines Transportsystems in einer Fertigungsstrasse für Süsswaren, im Speziellen von Schokoladenprodukten, mit mindestens einem verfahrbaren Transportwagen (2; 102) gemäss einem der Ansprüche 1-7 und mit mindestens einem Bahnelement (3; 103, 103e) zur Wegvorgabe des entlang dieses Bahnelements (3; 103, 103e) verfahrbaren Transportwagens (2; 102), **dadurch gekennzeichnet, dass** das Bahnelement (3; 103, 103e) für eine operative Wechselwirkung mit einem Antriebselement des Transportwagens (2; 102) ausgebildet ist, so dass der Transportwagen (2; 102) kraft seines Antriebs entlang des Bahnelements (3; 103, 103e) verfahrbar ist, insbesondere eine Verzahnung, Schiene, Nut und/oder ein elektro-magnetisches Kopplungselement aufweist.

9. Transportsystem, insbesondere zur Führung von Formen (1) bei der Herstellung von Süsswaren, im speziellen von Schokoladenprodukten, mit einer zumindest zwei Bearbeitungsstationen (B) verbindenden Bahn (13) und mindestens einem entlang dieser Bahn verfahrbaren Transportwagen (2; 102) gemäss einem der Ansprüche 1-7.

10. Transportsystem, gemäss Anspruch 9, mit einem Steuersystem (S) für das Transportsystem, **dadurch gekennzeichnet, dass** die Bahn (13) für eine operative Wechselwirkung mit einem Antriebselement des Transportwagens (2; 102) ausgebildet ist, so dass der Transportwagen (2; 102) kraft eines eigenen Antriebs entlang der Bahn (13) verfahrbar ist, insbesondere eine Verzahnung, Schiene, Nut und/oder ein elektro-magnetisches Kopplungselement aufweist.

11. Transportsystem nach Anspruch 9 oder 10, **dadurch gekennzeichnet, dass** die Bahn an zumindest einer Position eine elektrische Stromversorgungsstation zur zumindest temporären elektrischen Ankoppelung der Transportwagen (2; 102) aufweist, vorzugsweise in Form einer Stromschiene (3c), die sich über zumindest einen Längsabschnitt der Bahn (13) erstreckt und an die ein elektrisches Kontaktelement (2c) oder elektro-magnetisches kontaktloses Verbindungselement des Transportwagens (2; 102) operativ angekoppelt ist.

12. Transportsystem nach einem der Ansprüche 9 bis 11, **dadurch gekennzeichnet, dass** das Transportsystem Module (M) gemäss Anspruch 8 umfasst.

13. Transportsystem nach einem der Ansprüche 9 bis 12, **dadurch gekennzeichnet, dass** das Transportsystem Module zum Einschleusen und/oder Module zum Ausschleusen von Transportwagen umfasst.

14. Fertigungsstrasse für Süsswaren, im Speziellen von Schokoladeprodukten, mit zumindest zwei Bearbeitungsstationen (B), mit einer Mehrzahl von zwischen den Bearbeitungsstationen (B) beförderbaren Formen, **dadurch gekennzeichnet, dass** die Formen (1) mit Transportwagen (2; 102) gemäss zumindest einem der Ansprüche 1 bis 7 befördert werden oder dass die Fertigungsstrasse (200) ein Transportsystem (100) gemäss zumindest einem der Ansprüche 9 bis 13 umfasst.

15. Verfahren zum Transportieren mindestens einer Form zwischen zwei Bearbeitungsstationen (B) in einer Fertigungsstrasse (200) für Süsswaren, im Speziellen von Schokoladeprodukten, wobei mindestens eine Form (1) mit einem Transportwagen (2; 102) mit einem Antrieb, gemäss einem der Ansprüche 1 bis 7, befördert wird, insbesondere entlang eines Bahnelements (3; 103, 103e) in einem Modul (M) gemäss Anspruch 8 oder entlang einer Bahn (13) in einem Transportsystems (100) gemäss einem der Ansprüche 9 bis 13, wobei mindestens zwei Transportwagen unabhängig voneinander verfahren werden

16. Verfahren gemäss Anspruch 15, **dadurch gekennzeichnet, dass** die mindestens eine Form entlang eines Bahnelementes in horizontaler und vertikaler Richtung und/oder vorwärts und rückwärts verfahren werden kann.

## Claims

1. Transport carriage for transporting moulds in a, preferably spatially fixedly installed, transport system (100) in a production line (200) for confectionery, with a receptacle for or containing at least one mould (1), wherein the transport carriage (2; 102) is provided with a dedicated drive (8, 2b), in particular comprises at least one motor (8), **characterized in that** a holding arrangement for the fixing, the positioning control and/or centring of the mould (1), in particular a mould receptacle (12; 112), a spring arrangement (4) and/or a damper arrangement, is contained between the frame (7) of the transport carriage (2; 102) and a mould (1) to be transported.

2. Transport carriage according to Claim 1, **characterized in that** the drive of the transport carriage (2; 102) is provided with at least one drive device (6) which is selected from the group consisting of locomotion device, shaking devices, turning devices, lifting and/or lowering devices or rotation devices and which acts on the mould (1) preferably via at least one actuating element (6a), for example a mechanical contact element.

3. Transport carriage according to Claim 1 or 2, **characterized in that** the drive of the transport carriage (2; 102) has a locomotion device with at least one driven drive element (2b; 102b) for the movement of the transport carriage (2; 102) in relation to a track element (3; 103) or a track (13) of a transport system (100), preferably a pinion, a friction wheel or a contactless electromagnetic drive element, and/or **in that** the transport carriage (2; 102) has guide elements (2a; 102a) which interact with a preferably mechanical guide (3a) of a track element (3; 103) or a track (13) of the transport system (100).

4. Transport carriage according to Claims 1 to 3, **characterized in that** the transport carriage (2; 102) is provided with electric operating elements, in particular with an electric drive, with an electric contact element (2c) or with an electric energy accumulator (9).

5. Transport carriage according to at least one of Claims 1 to 4, **characterized in that** the transport carriage (2; 102) has a proximity sensor (5) for another transport carriage (2; 102).

6. Transport carriage according to at least one of Claims 1 to 5, **characterized in that** the transport carriage (2; 102) has a control system (10) which is preferably coupled to the drive.

7. Transport carriage according Claim 6, **characterized in that** the control system (10) comprises a transmitting and receiving unit (11) for communicating with at least one other control system (S, 10), in particular for communicating with a control system (10) of another transport carriage (2; 102), with a control system (S) of the transport system (100) and/or with a control system (S) of at least one of the processing stations (B) of a production line (200).

8. Module for constructing a transport system in a production line for confectionery, especially chocolate products, with at least one movable transport carriage (2; 102) according to one of Claims 1-7, and with at least one track element (3; 103, 103e) for predetermining the travel of the transport carriage (2; 102) which is movable along said track element (3; 103, 103e), **characterized in that** the track element (3; 103, 103e) is designed for operative interaction with a drive element of the transport carriage (2; 102), and therefore the transport carriage (2; 102) is movable by virtue of its drive along the track element (3; 103; 103e) in particular has a toothing, rail, groove and/or an electromagnetic coupling element.

9. Transport system, in particular for guiding moulds (1) during the production of confectionery, especially chocolate products, with a track (13) connecting at least two processing stations (B) and with at least one transport carriage (2; 102) according to one of Claims 1-7 which is movable along said track.

10. Transport system according to Claim 9, with a control system (S) for the transport system, **characterized in that** the track (13) is designed for operative interaction with a drive element of the transport carriage (2; 102), and therefore the transport carriage (2; 102) is movable by virtue of its own drive along the track (13), in particular has a toothing, rail, groove and/or an electromagnetic coupling element.

11. Transport system according to Claim 9 or 10, **characterized in that** the track, at at least one position, has an electric power supply station for the at least temporary electric coupling of the transport carriages (2; 102), preferably in the form of a busbar (3c) which extends over at least a longitudinal portion of the track (13) and to which an electric contact element (2c) or electromagnetic contactless connecting element of the transport carriage (2; 102) is operatively connected.

12. Transport system according to one of Claims 9 to 11, **characterized in that** the transport system comprises modules (M) according to Claim 8.

13. Transport system according to one of Claims 9 to 12, **characterized in that** the transport system comprises modules for in-feeding and/or modules for out-feeding transport carriages.

14. Production line for confectionery, especially chocolate products, with at least two processing stations (B), with a plurality of moulds which can be conveyed between the processing stations (B), **characterized in that** the moulds (1) are conveyed by transport carriages (2; 102) according to at least one of Claims 1 to 7, or **in that** the production line (200) comprises a transport system (100) according to at least one of Claims 9 to 13.

15. Method for transporting at least one mould between two processing stations (B) in a production line (200) for confectionery, especially chocolate products, wherein at least one mould (1) is conveyed with a transport carriage (2; 102) having a drive, according to one of Claims 1 to 7, in particular along a track element (3; 103, 103e) in a module (M) according to Claim 8 or along a track (13) in a transport system (100) according to one of Claims 9 to 13, wherein at least two transport carriages are moved independently of one another.

16. Method according to Claim 15, **characterized in that** the at least one mould can be moved along a track element in the horizontal and vertical direction and/or forwards and rearwards.

## Revendications

1. Chariot de transport pour le transport de moules dans un système de transport (100) installé de préférence de façon fixe dans l'espace dans une ligne de fabrication (200) pour des confiseries avec un logement pour ou contenant au moins un moule (1), dans lequel le chariot de transport (2; 102) est équipé d'un entraînement individuel (8, 2b), comprend en particulier au moins un moteur (8), **caractérisé en ce qu'**un dispositif de maintien pour la fixation, le contrôle de position et/ou le centrage du moule (1), en particulier un logement de moule (12; 112), un agencement de ressorts (4) et/ou un dispositif d'amortissement, est agencé entre le châssis (7) du chariot de transport (2; 102) et le moule à transporter (1) .

2. Chariot de transport selon la revendication 1, **caractérisé en ce que** l'entraînement du chariot de transport (2; 102) est équipé d'au moins un dispositif d'entraînement (6), qui est choisi dans le groupe comprenant un dispositif d'avancement, des dispositifs à secousses, des dispositifs de retournement, des dispositifs de montée et/ou de descente ou des dispositifs de rotation, et qui agit sur le moule (1) de préférence au moyen d'au moins un élément d'actionnement (6a), par exemple un élément de contact mécanique.

3. Chariot de transport selon une revendication 1 ou 2, **caractérisé en ce que** l'entraînement du chariot de transport (2; 102) présente un dispositif d'avancement avec au moins un élément d'entraînement entraîné (2b; 102b) pour l'avancement du chariot de transport (2; 102) par rapport à un élément de voie (3; 103) ou une voie (13) d'un système de transport (100), de préférence un pignon, un roue de friction ou un élément d'entraînement électromagnétique sans contact, et/ou **en ce que** le chariot de transport (2; 102) présente des éléments de guidage (2a; 102a), qui coopèrent avec un guidage de préférence mécanique (3a) d'un élément de voie (3; 103) ou d'une voie (13) du système de transport (100).

4. Chariot de transport selon l'une quelconque des revendications 1 à 3, **caractérisé en ce que** le chariot de transport (2; 102) est équipé d'éléments d'entraînement électriques, en particulier d'un entraînement électrique, d'un élément de contact électrique (2c) ou d'un accumulateur d'énergie électrique (9).

5. Chariot de transport selon au moins une des revendications 1 à 4, **caractérisé en ce que** le chariot de transport (2; 102) présente un détecteur de proximité (5) pour un autre chariot de transport (2; 102) .

6. Chariot de transport selon au moins une des revendications 1 à 5, **caractérisé en ce que** le chariot de transport (2; 102) présente un système de commande (10), qui est de préférence couplé à l'entraînement.

7. Chariot de transport selon la revendication 6, **caractérisé en ce que** le système de commande (10) comprend une unité d'émission et de réception (11) pour la communication avec au moins un autre système de commande (S, 10), en particulier pour la communication avec un système de commande (10) d'un autre chariot de transport (2; 102), avec un système de commande (S) du système de transport (100) et/ou avec un système de commande (S) d'au moins une des stations de traitement (B) d'une ligne de fabrication (200).

8. Module de construction d'un système de transport dans une ligne de fabrication de confiseries, spécialement de produits de chocolat, avec au moins un chariot de transport déplaçable (2; 102) selon l'une quelconque des revendications 1 à 7 et avec au moins un élément de voie (3; 103; 103e) pour définir le chemin du chariot de transport (2; 102) déplaçable le long de cet élément de voie (3; 103; 103e), **caractérisé en ce que** l'élément de voie (3; 103; 103e) est configuré pour une interaction active avec un élément d'entraînement du chariot de transport (2; 102), de telle manière que le chariot de transport (2; 102) soit déplaçable le long de l'élément de voie (3; 103; 103e) sous l'action de son entraînement, en particulier présente une denture, un rail, une rainure et/ou un élément de couplage électromagnétique.

9. Système de transport, en particulier pour le guidage de moules (1) lors de la fabrication de confiseries, spécialement de produits de chocolat, avec une voie (13) reliant au moins deux stations de traitement (B) et au moins un chariot de transport (2; 102) selon l'une quelconque des revendications 1 à 7 déplaçable le long de cette voie.

10. Système de transport selon la revendication 9, avec un système de commande (S) pour le système de transport, **caractérisé en ce que** la voie (13) est configurée pour une interaction active avec un élément d'entraînement du chariot de transport (2; 102), de telle manière que le chariot de transport (2; 102) soit déplaçable le long de la voie (13) sous l'action d'un entraînement individuel, en particulier présente une denture, un rail, une rainure et/ou un élément de couplage électromagnétique.

11. Système de transport selon une revendication 9 ou 10, **caractérisé en ce que** la voie présente en au moins une position une station d'alimentation en courant électrique pour le couplage électrique au moins temporaire des chariots de transport (2; 102), de préférence sous la forme d'un rail de contact (3c), qui s'étend sur au moins une partie longitudinale de la voie (13) et auquel un élément de contact électrique (2c) ou un élément de liaison électromagnétique sans contact du chariot de transport (2; 102) est activement couplé.

12. Système de transport selon l'une quelconque des revendications 9 à 11, **caractérisé en ce que** le système de transport comprend des modules (M) selon la revendication 8.

13. Système de transport selon l'une quelconque des revendications 9 à 12, **caractérisé en ce que** le système de transport comprend des modules pour insérer et/ou des modules pour retirer des chariots de transport.

14. Ligne de fabrication pour des confiseries, spécialement pour des produits de chocolat, avec au moins deux stations de traitement (B), avec une multiplicité de moules pouvant être transportés entre les stations de traitement (B), **caractérisée en ce que** les moules (1) sont transportés avec des chariots de transport (2; 102) selon au moins une des revendications 1 à 7 ou **en ce que** la ligne de fabrication (200) comprend un système de transport (100) selon au moins une des revendications 9 à 13.

15. Procédé pour le transport d'au moins un moule entre deux stations de traitement (B) dans une ligne de fabrication (200) pour des confiseries, spécialement des produits de chocolat, dans lequel on transporte au moins un moule (1) avec un chariot de transport (2; 102) avec un entraînement selon l'une quelconque des revendications 1 à 7, en particulier le long d'un élément de voie (3; 103; 103e) dans un module (M) selon la revendication 8 ou le long d'une voie (13) dans un système de transport (100) selon l'une quelconque des revendications 9 à 13, dans lequel on déplace au moins deux chariots de transport indépendamment l'un de l'autre.

16. Procédé selon la revendication 15, **caractérisé en ce que** ledit au moins un moule peut être transporté le long d'un élément de voie en direction horizontale et verticale et/ou vers l'avant et vers l'arrière.
